# NEUE EUROPÄISCHE PATENTSCHRIFT

(11) **EP 2 278 361 B2**
(45) Veröffentlichungstag und Bekanntmachung des Hinweises auf die Entscheidung über den Einspruch: **23.02.2022**
(45) Hinweis auf die Patenterteilung: 02.04.2014
(21) Anmeldenummer: 09166248.6
(22) Anmeldetag: 23.07.2009
(51) Int. Cl.: G01S 7/481, G01S 17/48, G01V 8/20, G01N 21/47, G01S 17/02

(54) **Optoelektronischer Sensor**
Optoelectronic sensor
Capteur optoélectronique

(43) Veröffentlichungstag der Anmeldung: 26.01.2011
(73) Patentinhaber: SICK AG, 79183 Waldkirch (DE)
(72) Erfinder: Hirt, Günter, 77790 Steinach (DE); Opfolter, Matthias, 79211 Denzlingen (DE)

(56) Entgegenhaltungen:
- EP-A- 0 081 702
- EP-A- 1 050 843
- EP-A2- 1 496 335
- DE-A1- 19 619 308
- DE-A1- 19 920 184
- DE-A1-102004 037 137
- DE-A1-102005 003 073
- DE-A1-102005 037 490
- DE-A1-102006 057 878
- DE-A1-102007 034 069
- DE-B3-102006 019 468
- DE-C1- 19 621 120
- DE-U1-202007 000 515
- DE-U1-202007 013 315
- US-A1- 2001 017 345
- J. Friesen: "Entwurf, Umsetzung und Validierung eines Sensors zur qualitativen Erfassung von Glanz eines Gegenstands", Diplomarbeit, March 2009 (2009-03),

## Beschreibung

Die Erfindung betrifft einen optoelektronischen Sensor nach Art eines Lichttasters gemäß dem Oberbegriff des Anspruchs 1.

Ein solcher Sensor ist aus der EP 0 735 501 B1 bekannt. Dort ist ein Farbtaster beschrieben, bei dem das Sendelicht aus drei verschiedenen LEDs überlagert wird und als Sendelichtstrahl ausgesandt wird. Insgesamt ist damit ein Sendekanal gebildet. In Autokollimation, also auf dem gleichen Lichtweg, wird das an einem zu detektierenden Objekt reflektierte Empfangslicht von einem Lichtempfänger empfangen. Sende- und Empfangskanal sind damit kollinear, wobei das Empfangslicht im Sensor durch einen Teilerspiegel vom Sendekanal getrennt wird. Mit diesem Sensor lassen sich Farbmarken detektieren.

Zum Detektieren von Objekten und insbesondere zur Messung der Entfernung des Objekts vom Sensor sind prinzipiell auch Lichttaster bekannt, die nach dem Prinzip der Triangulation arbeiten.

Aus der EP-A 1 050 843 ist ein Lumineszenztaster bekannt, der in einer Ausführungsform als Autokollimationssensor und in einer anderen Ausführungsform als Triangulationstaster ausgebildet ist.

Aus der DE 196 21 120 C1 ist eine optoelektronische Vorrichtung mit einem Sender und zwei Empfängern bekannt, bei der mit dem einen Empfänger eine direkte Rückreflexion feststellbar ist und mit dem anderen Empfänger nach dem Triangulationsprinzip eine Entfernungsmessung möglich ist.

Ausgehend von diesem Stand der Technik ist es Aufgabe der Erfindung, einen verbesserten Sensor nach Art eines Lichttasters bereitzustellen, der funktionell erweitert ist.

Diese Aufgabe wird gelöst durch einen optoelektronischen Sensor mit den Merkmalen des Anspruchs 1.

Ein solcher optoelektronischer Sensor weist wenigstens einen Lichtsender, dessen Sendelichtweg einen Sendekanal definiert und das Sendelicht auf ein zu detektierendes Objekt fällt, wenigstens einen ersten Lichtempfänger, dessen Empfangslichtweg einen ersten Empfangskanal definiert und der vom Objekt in den Sendekanal gerichtet zurückreflektiertes Empfangslicht empfängt, auf, wobei Sendekanal und erster Empfangskanal kollinear sind, so dass diesbezüglich Autokollimation vorliegt. Die vom empfangenen Licht abhängigen Empfangssignale werden in einer Auswerteeinheit ausgewertet. Es ist ein zweiter Empfangskanal mit einem zweiten Lichtempfänger vorgesehen, der getrennt von dem Sendekanal ist, so dass das Sendelicht und das mit dem zweiten Empfangskanal erfassbare, durch diffuse Remission des Sendelichts am Objekt (36) erzeugte Empfangslicht eine Triangulationsanordnung bilden.

Auf diese Weise lassen sich sowohl direkte Rückreflexionen über den ersten Empfangskanal erfassen, als auch diffus remittiertes Licht über den zweiten Empfangskanal. Im ersten Empfangskanal lassen sich auf diese Weise glänzende Objekte oder Marken detektieren, weshalb dieser Kanal im Folgenden vereinfacht auch als "Glanzkanal" bezeichnet werden soll. Im zweiten Empfangskanal lassen sich nicht-gerichtete Reflexionen, also diffuse Remissionen, detektieren, weshalb im Folgenden dieser Kanal vereinfacht auch als "Remissionskanal" bezeichnet werden soll. Aufgrund der Triangulationsanordnung funktioniert eine Detektion über den Remissionskanal nur in einem gewissen Abstandbereich.

Daraus ergibt sich nicht nur der Vorteil, dass der erfindungsgemäße Sensor für eine Vielzahl von Anwendungen einsetzbar ist, sondern mit dem gleichen Sensor gleichzeitig sowohl glänzende als auch diffus remittierende Objekte detektiert werden können. Somit ist einerseits zur einfachen Objekterkennung der Sensor unabhängig vom Material des Objektes, andererseits können durch die getrennte Erfassung der direkten Rückreflexionen im Glanzkanal und des diffus remittierten Lichts im Remissionskanal Objekteigenschaften erkannt werden, so dass damit eine Differenzierung zwischen verschiedenen Objekten zur Erhöhung der Objekterkennungssicherheit möglich ist.

Insgesamt ist der erfindungsgemäße Sensor erheblich vielseitiger einsetzbar.

Es ist eine Sendeoptik vorgesehen, um das Sendelicht auf einen Detektionsbereich zu fokussieren. Des Weiteren ist eine Empfangsoptik für den zweiten Empfangskanal vorgesehen, um das diffus remittierte Licht in diesen Remissionskanal optimal einzukoppeln.

In Weiterbildung der Erfindung sind die Sendeoptik und die Empfangsoptik derart in einem Winkel zueinander ausgerichtet, dass mit dem zweiten Empfangskanal nur das diffus remittierte Licht erfassbar ist und mit dem ersten Empfangskanal nur das gerichtet reflektierte Licht. Damit ist eine möglichst vollständige Trennung der beiden "Lichtarten" möglich, die eine verbesserte Materialerkennung erlaubt.

In vielen Anwendungen ist der Montageplatz für die erfindungsgemäßen Sensoren eingeschränkt, so dass die Sendeoptik und die Empfangsoptik in einem Optikkopf angeordnet sind, der über Lichtleiter mit einem Sensorgehäuse verbunden ist. Damit kann der erfindungsgemäße Sensor beispielsweise mit besonderem Vorteil in Druckmaschinen zur Erkennung der verschiedensten Druckstoffe eingesetzt werden, in denen in der Regel die Bauräume direkt an den Druckstoffen sehr begrenzt sind.

Überhaupt ist der erfindungsgemäße Sensor insbesondere an Druckmaschinen zur Erkennung der verschiedenen Druckstoffe vorteilhaft einsetzbar. Bei den Druckstoffen kann es sich zum Beispiel um Papier, Folie, Stoff, Leinen u.s.w. handeln, die als solche erkannt werden müssen und deren Remissions- und Reflektionseigenschaften sehr unterschiedlich sind, aber von dem erfindungsgemäßen Sensor alle erkannt werden können. Eine mit den erfindungsgemäßen Sensor ausgerüstete Druckstufe einer Druckmaschine ist somit für eine Vielzahl von Druckstoffen einsetzbar.

Da im Remissionskanal naturgemäß weniger Licht empfangen wird, da die Remission diffus erfolgt, hat der Lichtleiter des zweiten Empfangskanals zur besseren Lichtausbeute einen größeren Durchmesser wie der des ersten.

Wenn der Sensor drei Lichtsender mit jeweils unterschiedlicher Wellenlänge oder Wellenlängenspektrum (z.B. NIR, Weiß, UV oder Rot, Grün, Blau) aufweist und das Licht der Lichtsender über Teilerspiegel in den gemeinsamen Sendekanal einkoppelbar ist, stehen zur Auswertung insgesamt sechs Empfangssignale zur Verfügung, nämlich die der drei Farben im Glanzkanal und im Remissionskanal. Dadurch können in verbesserter Weise Materialeigenschaften erkannt werden. So kann bei Einsatz von UV-Licht im Remissionskanal z. B. auch Lumineszenzlicht detektiert werden, so dass der erfindungsgemäße Sensor auch als Lumineszenztaster einsetzbar ist. Damit können mit dem Sensor Sonderfarben erheblich besser erkannt werden. So kann z. B. ein durchsichtiger Kleber auf weißem Papier erkannt werden, wie er beim Verpacken von Lebensmitteln häufig eingesetzt wird.

Da der Remissionskanal gegenüber dem Sendekanal in einer Triangulationsanordnung angeordnet ist, besteht eine Entfernungsabhängigkeit in Bezug auf die Position des in den Remissionskanal einzukoppelnden Empfangslichtbündels. Dies kann ausgenutzt werden, um den Lichtanteil, der eingekoppelt wird, so zu beeinflussen, dass dieser im Wesentlichen unabhängig ist von der Entfernung. In Weiterbildung der Erfindung erfolgt dies durch eine Blende in der Empfangsoptik, die eine solche Geometrie aufweist, so dass der gewünschte Lichtanteil eingekoppelt wird. Selbstverständlich kann dies nur in einem bestimmten Entfernungsbereich gültig sein.

Wenn das Empfangslicht im Sensorgehäuse mit einem optischen Element so umgelenkt wird, dass die Lichtempfänger nicht in einer durch das Sendelicht definierten Ebene liegen, kann die Größe des Sensors mit seinen Lichtsendern und Lichtempfängern beschränkt bleiben.

Vorteilhafterweise sind die Lichtempfänger auf einer gemeinsamen Platine angeordnet sind. Das reduziert nicht nur den Bauraum, sondern erleichtert auch die Montage eines solchen Sensors.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung eines Sensors in einer Draufsicht;
- Fig. 2: eine Ansicht entlang der Linie II-II aus Fig. 1;
- Fig. 3: eine Ansicht entlang der Linie III-III aus Fig. 1 eines Ausführungsbeispiels;
- Fig. 4: eine schematische Ansicht wie Fig. 1 eines weiteren Ausführungsbeispiels;
- Fig. 5: eine Darstellung des Optikkopfs aus Fig. 3 zur Darstellung der Situation bei verschiedenen Tastabständen;
- Fig. 6: eine Blende

Ein optoelektronischer Sensor 10 weist wenigstens einen, insbesondere drei Lichtsender 12, 14, 16 auf, die bevorzugt Licht unterschiedlicher Wellenlänge ausstrahlen, wobei der Lichtsender 12 das langwelligste Licht ausstrahlt, der Lichtsender 14 eine kürzere Wellenlänge als der Lichtsender 12 und der Lichtsender 16 eine noch kürzere Wellenlänge als der Lichtsender 14. Beispielsweise handelt es sich bei den drei Wellenlängen um rotes, grünes und blaues Licht oder auch nahes Infrarotlicht (NIR), weißes Licht und UV-Licht. Die Lichtsender 12 und 14 strahlen in zueinander senkrechten Richtungen ab, wobei die Lichtstrahlen 18 und 20 über einen ersten dichroitischen Spiegel 22 auf einen gemeinsamen Lichtweg 24 vereinigten werden. Der Lichtweg 24 ist wiederum senkrecht zum Licht 26 des Lichtsenders 16. Die Lichtstrahlen 24 und 26 werden über einen zweiten dichroitischen Spiegel 28 auf einen gemeinsamen Lichtweg 30 zusammengeführt. Die so erzeugten Lichtstrahlen 30 werden über eine Sendeoptik 32 und durch eine Frontscheibe 31 auf einen Detektionsbereich 34 fokussiert. Im Detektionsbereich 34 kann sich ein Objekt 36 befinden, das mit dem Sensor 10 detektiert werden soll.

Die Lichtsender 12, 14 und 16 werden über eine Auswerteeinheit 39 angesteuert, so dass sie beispielsweise das Sendelicht der verschiedenen Farben gepulst zeitlich nacheinander aussenden können.

Der Sendelichtweg 30 definiert einen Sendekanal zwischen dem optoelektronischen Sensor 10 und dem Detektionsbereich 34.

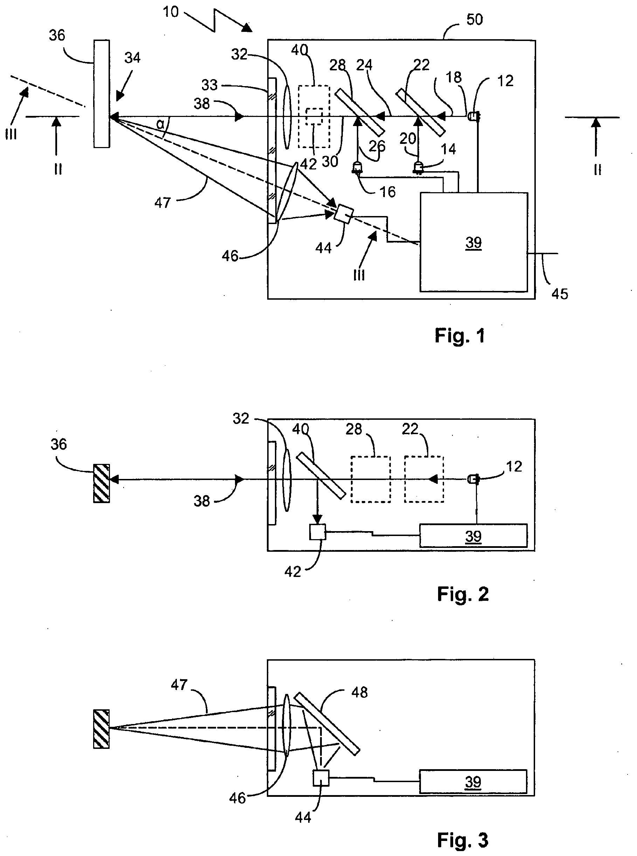

Das Sendelicht kann an dem Objekt 36 gerichtet reflektiert werden, so dass sich der gerichtete Reflex, wenn das Sendelicht senkrecht auf das Objekt 36 einfällt, wieder in den Sendekanal zurückreflektiert wird, wie dies durch den Pfeil 38 angedeutet sein soll. Das auf diese Weise gerichtet reflektierte Empfangslicht 38 definiert einen ersten Empfangskanal, der bei senkrechtem Lichteinfall auf das Objekt 36 das so reflektierte Empfangslicht aufnimmt. Sendekanal und erster Empfangskanal sind somit kollinear, so dass diesbezüglich Autokollimation vorliegt. Das Empfangslicht 38 wird somit wieder zurück durch die Sendeoptik 32 geführt und fällt auf einen Teilerspiegel 40, der das Empfangslicht 38 auf einen Lichtempfänger 42 umlenkt. Dies ist insbesondere in Fig. 2 zu erkennen.

Die in Abhängigkeit des Lichteinfalls auf den Lichtempfänger 42 erzeugten Empfangssignale werden in der Auswerteeinheit 39 ausgewertet. Die Auswerteeinheit 39 kann nach Auswertung der Empfangssignale beispielsweise an einem Schaltausgang 45 ein entsprechendes Objektfeststellungssignal oder dergleichen ausgeben.

Das Besondere an dem Sensor 10 besteht weiterhin in der Anordnung eines zweiten Empfangskanal, der nun beschrieben werden soll. Dieser zweite Empfangskanal wird definiert durch einen zweiten Lichtempfänger 44 und eine Empfangsoptik 46 mittels derer diffus am Objekt 36 remittiertes Licht 47 im Detektionsbereich 34 erfassbar ist. Der zweite Empfangskanal soll im Folgenden auch Remissionskanal genannt werden.

Somit liegt zwischen dem Sendelicht und dem mit dem Remissionskanal erfassbaren Empfangslicht 47 eine Triangulationsanordnung vor, wobei der Sendekanal und der Remissionskanal in einem Winkel α zueinander angeordnet sind. Es versteht sich, dass der zweite Lichtempfänger 44 nur dann remittiertes Licht empfangen kann, wenn das Objekt 36 in einem durch die Triangulationsanordnung definierten Entfernungsbereich liegt.

Der Winkel α ist dabei vorteilhafterweise derart gewählt, dass mit dem Remissionskanal nur das diffus remittiertes Licht 47 erfassbar ist und mit dem Glanzkanal nur das gerichtet reflektierte Licht 38 empfangen wird, also das diffus remittierten Licht 47 von dem gerichtet reflektierte Licht 38 getrennt empfangen und ausgewertet werden kann.

Der Sensor 10 weist ein Sensorgehäuse 50 auf, in dem die erwähnten Komponenten angeordnet sind. Vorteilhafterweise wird auch das Empfangslicht 47 im Remissionskanal nach Durchtritt durch die Empfangsoptik 46 über einen Spiegel 48 auf den zweiten Empfänger 44 umgelenkt, wie dies in dem Ausführungsbeispiel nach Fig. 3 dargestellt ist. Damit können sowohl der erste als auch der zweite Lichtempfänger 42 und 44 in einer Ebene auf einer gemeinsamen Leiterplatte angeordnet sein.

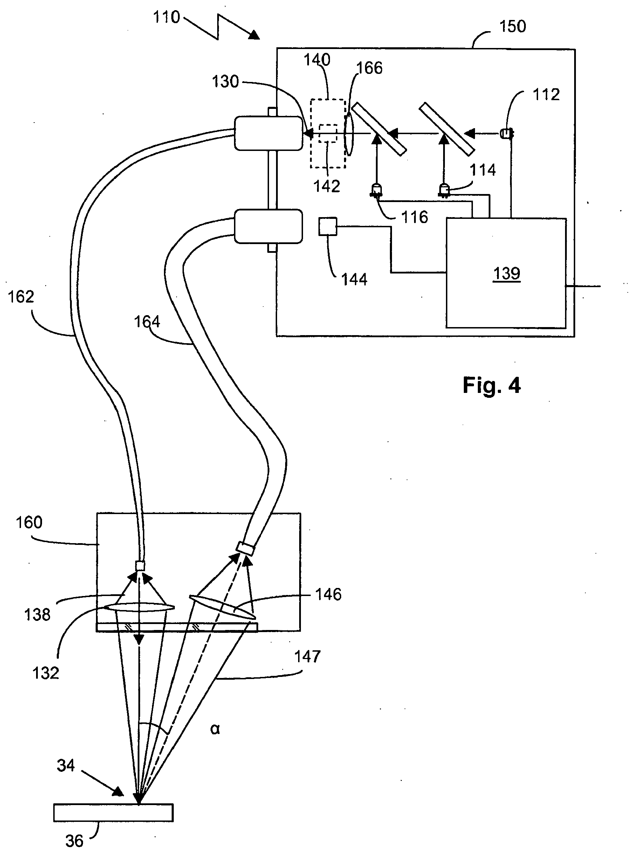

In Fig. 4 ist ein Ausführungsbeispiel der Erfindung dargestellt. Gleiche Komponenten haben zur besseren Übersicht die gleichen Bezugsziffern jeweils um 100 erhöht. In diesem Ausführungsbeispiel weist der erfindungsgemäße Sensor 110 einen getrennt vom Sensorgehäuse 150 vorgesehenen Optikkopf 160 auf. Der Optikkopf 160 ist mit dem Sensorgehäuse 150 über Lichtleiter 162 und 164 verbunden, wobei der Lichtleiter 162 den Sende- und Glanzkanal enthält und der Lichtleiter 164 den Remissionskanal. Die Lichtleiter können als Lichtleitfaser oder Faserbündel ausgebildet sein. Zum Anschluss der Lichtleiter 162 und 164 an das Sensorgehäuse 150 ist anstelle der Frontscheibe nun ein Adapter 133 vorgesehen, der einen einfachen Steckanschluss der Lichtleiter ermöglicht.

Das Sendelicht 130 wird wie in dem ersten Ausführungsbeispiel nach Fig. 1 in gleicher Weise über beispielsweise drei Lichtsender 112, 114 und 116 erzeugt und über eine Einkoppeloptik 166 in den Lichtleiter 162 eingekoppelt. Die der Sendeoptik 32 des ersten Ausführungsbeispieles entsprechende Sendeoptik 132 ist jetzt im Optikkopf 160 angeordnet. Mittels der Sendeoptik 132 wird somit das Sendelicht einerseits in den Detektionsbereich 34 fokussiert und andererseits das gerichtet reflektierte Empfangslicht 138 in den Lichtleiter 162 eingekoppelt, um wie in dem ersten Ausführungsbeispiel über den Glanzkanal auf einem Empfänger 142 empfangen werden zu können.

Über eine Empfangsoptik 146, die der Empfangsoptik 46 des ersten Ausführungsbeispieles entspricht, wird das diffus remittierte Licht 147 in den zweiten Lichtleiter 164 eingekoppelt und von diesem auf den zweiten Lichtempfänger 144 geführt.

Der Winkel α zwischen dem Sendelicht 130 und dem Remissionslicht 147 wird jetzt definiert durch die Anordnung der Sendeoptik 132 und der Empfangsoptik 146 im Optikkopf 160.

Um die Lichtausbeute im Remissionskanal zu erhöhen, weist der zweite Lichtleiter 164 einen größeren Durchmesser auf als der erste Lichtleiter 162.

Wie im ersten Ausführungsbeispiel, wird sowohl im Glanzkanal als auch im Remissionskanal das Empfangslicht vorteilhafterweise über einen Teilerspiegel bzw. einen Spiegel umgelenkt, damit die beiden Empfänger 142 und 144 in einer anderen Ebene als das Sendelicht auf einer gemeinsamen Leiterplatte angeordnet werden können. Dies ist für das zweite Ausführungsbeispiel in den Figuren nicht im Detail dargestellt.

Der Optikkopf 160 hat den besonderen Vorteil, dass dieser auch in schwer zugänglichen Bereichen zur Detektion von Objekten 36 eingesetzt werden kann, wie dies häufig in Druckmaschinen der Fall ist.

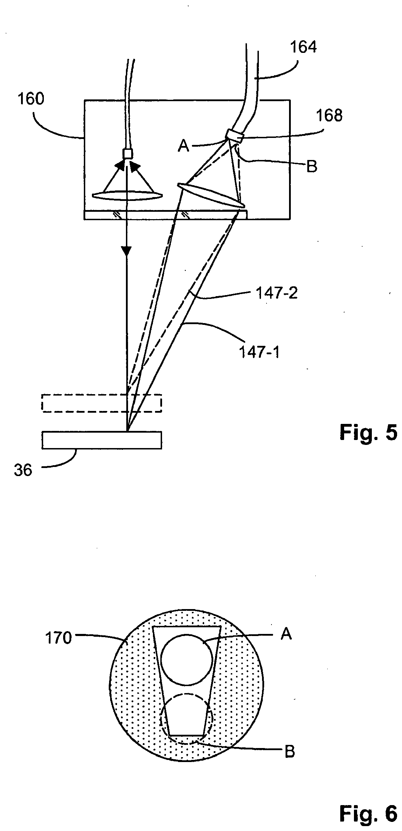

In den Fig. 5 und 6 schließlich ist eine Situation dargestellt, bei der das Objekt 36 in zwei verschiedenen Abständen auftritt. Dies bewirkt aufgrund der Triangulationsanordnung im Remissionskanal eine Verschiebung des Empfangslichtflecks auf dem Kopfende 168 der zweiten Lichtleitfaser 164, wie dies schematisch anhand der durchgezogenen Linien 147-1, die einen Lichtempfang an einem ersten Punkt A bewirken und der gestrichelten Linien 147-2, die einen Lichtempfang am Ort B bewirken, dargestellt sein soll.

Dieser Effekt kann ausgenutzt werden, um mit einer Blende 170, die beispielsweise am Ort des Kopfendes 168 des Lichtleiters 164 angeordnet sein könnte, nur bestimmte Lichtanteile des Empfangslichtflecks durchzulassen, und zwar derart, dass je geringer der Abstand des Objekts 36 vom Optikkopf 160 ist, desto mehr Lichtanteile werden durch die Blende 170 abgedeckt. Dies ist beispielsweise in Fig. 6 anhand der beiden Positionen A und B dargestellt, wobei Position B der kürzeren Entfernung zwischen Objekt 36 und Optikkopf 160 entspricht. Damit soll erreicht werden, dass in einem groben Rahmen der von der Blende 170 durchgelassene Lichtanteil des Empfangslichtes unabhängig ist von dem Abstand des zu detektierenden Objekts 36. Dies gilt selbstverständlich nur in einem gewissen Entfernungsbereich, der durch die Triangulationsanordnung definiert ist, denn der Lichtempfangsfleck muss überhaupt auf die Lichtleitfaser treffen. In diesem Entfernungsbereich ist somit die Tiefenschärfe verbessert.

Eine solche Blende könnte selbstverständlich auch in dem Ausführungsbeispiel nach Fig. 1 vorgesehen sein.

## Patentansprüche

1. Lichttaster, mit wenigstens einem Lichtsender (12, 14, 16), dessen Sendelichtweg (30) einen Sendekanal definiert und das Sendelicht auf ein zu detektierendes Objekt (36) fällt, wenigstens einem ersten Lichtempfänger (42), dessen Empfangslichtweg (38) einen ersten Empfangskanal definiert und der vom Objekt (36) in den Sendekanal gerichtet zurückreflektiertes Empfangslicht (38) empfängt, wobei Sendekanal und erster Empfangskanal kollinear sind, so dass diesbezüglich Autokollimation vorliegt und mit einer Auswerteeinheit (39) zum Auswerten des Empfangslichts (38, 47) und zur Detektion glänzender Objekte in dem ersten Empfangskanal, wobei ein zweiter Empfangskanal mit einem zweiten Lichtempfänger (44) vorgesehen ist, der getrennt von dem Sendekanal ist, so dass das Sendelicht (30) und das mit dem zweiten Empfangskanal erfassbare, durch diffuse Remission des Sendelichts am Objekt (36) erzeugte Empfangslicht (47) eine Triangulationsanordnung bilden und die Auswerteeinheit ausgebildet ist, in dem zweiten Empfangskanal diffus remittierende Objekte zu detektieren und wobei mittels einer Sendeoptik (32) das Sendelicht auf einen Detektionsbereich (34) fokussierbar ist und das diffus remittierte Licht mittels einer Empfangsoptik (46) in den zweiten Empfangskanal einkoppelbar ist und wobei Sendeoptik (132) und Empfangsoptik (146) in einem Optikkopf (160) angeordnet sind, der über Lichtleiter (162, 164) mit einem Sensorgehäuse (150) verbunden ist.

2. Sensor nach Anspruch 1, **dadurch gekennzeichnet, dass** Sendeoptik (32) und Empfangsoptik (46) derart in einem Winkel (α) zueinander ausgerichtet sind, dass mit dem zweiten Empfangskanal diffus remittiertes Licht (47) erfassbar ist und mit dem ersten Empfangskanal das gerichtet reflektierte Licht (38).

3. Sensor nach Anspruch 1 oder 2, **dadurch gekennzeichnet, dass** der Lichtleiter (164) des zweiten Empfangskanals einen größeren Durchmesser hat wie der des ersten.

4. Sensor nach einem der vorhergehenden Ansprüche, **dadurch gekennzeichnet, dass** drei Lichtsender (12, 147, 16) mit unterschiedlicher Wellenlänge vorgesehen sind, deren Licht über Teilerspiegel (22, 28) in den gemeinsamen Sendekanal einkoppelbar ist.

5. Sensor nach einem der vorhergehenden Ansprüche 1 bis 3, **dadurch gekennzeichnet, dass** die Empfangsoptik (146) eine Blende (170) aufweist, deren Geometrie derart ausgebildet ist, dass der von der Blende (170) durchgelassene Lichtanteil im Wesentlichen unabhängig ist von dem Abstand des zu detektierenden Objekts (36) vom Sensor (10) bzw. Optikkopf (160).

6. Sensor nach einem der vorhergehenden Ansprüche, **dadurch gekennzeichnet, dass** Empfangslicht mit einem optischen Element (40, 48) so umgelenkt wird, dass der oder die Lichtempfänger (42, 44) nicht in einer durch das Sendelicht definierten Ebene liegen.

7. Sensor nach einem der vorhergehenden Ansprüche, **dadurch gekennzeichnet, dass** erster und zweiter Lichtempfänger (44, 42) auf einer gemeinsamen Platine angeordnet sind.

## Claims

1. Light scanner having at least one light transmitter (12, 14, 16), the transmission light path (30) defines a transmission channel and the transmitted light impinges on an object to be detected (36), at least a first light receiver ( 42 ) whose reception light path (38) defines a first receiving channel and the receiver receives reception light (38) reflected back from the object ( 36) into the transmission channel, said transmission channel and first receiving channel being collinear, so that in this respect there is autocollimation, and with an evaluation unit (39 ) for evaluating the received light (38, 47) and for detection of shining objects in the first receiving channel, wherein a second receiving channel is provided with a second light receiver (44) which is separate from the transmission channel, so that the transmitted light (30) and reception light (47) which is detectable through the second receiving channel and generated by diffuse remittance of the transmitted light at the object (36), form a triangulation arrangement and the evaluation unit is designed to detect diffuse remitting objects in the second receiving channel and in that by means of a transmitting optics (32) the transmitted light is focusable onto a detection region (34) and the diffusely remitted light is coupled into the second receiving channel by an optical receiving system (46) and the transmitting optics (132) and the optical receiving system (146) are arranged in an optical head (160) which is connected to a sensor housing (150) via light guides (162, 164).

2. Sensor according to claim 1, **characterized in that** transmitting optics (32) and receiving optical system (46) are aligned with each other at an angle (α) in such a way, that the diffusely light reflected (47) can be detected with the second receiving channel and the directional reflected light (38) with the first receiving channel.

3. Sensor according to one of the preceding claims 1 or 2, **characterized in that** the light guide (164) of the second receiving channel having a larger diameter as that of the first channel.

4. Sensor according to one of the preceding claims, **characterized in that** three light transmitters (12, 14, 16) with different wavelengths are provided, the light of which is coupled into the common transmission channel via beam splitter (28, 22).

5. Sensor according to one of the preceding claims 1 to 3, **characterized in that** the receiving optical system (146) having an aperture (170) which geometry is designed such that the portion of light transmitted by the aperture (170) is substantially independent of the distance of the object to be detected (36) from the sensor (10) or optical head (160), respectively.

6. Sensor according to one of the preceding claims, **characterized in that** the received light is deflected by an optical element (40, 48) such that the one or more light receivers (42, 44) do not lie in a plane defined by the transmitted light.

7. Sensor according to one of the preceding claims, **characterized in that** the first and second light receiver (42, 44) are arranged on a common circuit board.

## Revendications

1. Balayage de lumière ayant au moins un émetteur de lumière (12, 14, 16), le trajet de lumière de transmission (30) définit un canal de transmission et la lumière transmise frappe à un objet à détecter (36), à moins un premier récepteur de lumière (42) dont le trajet de la lumière de réception (38) définit un premier canal de réception et le récepteur reçoit de la lumière de réception (38) réfléchi par l'objet (36) dans le canal de transmission, ledit canal de transmission et le premier canal de réception sont colinéaires, de sorte qu'à cet égard, il est autocollimation, et avec une unité d'évaluation (39) pour évaluer la lumière reçue (38, 47) et pour le détection des objets reluisants dans le premier canal, et un deuxième canal de réception est muni avec un second récepteur de lumière (44) qui est distincte à partir du canal de transmission, de sorte que la lumière transmise (30) et la lumière de réception (47) qui est détectable à travers le second canal de réception et qui est généré par réflexion diffuse à l'objet (36) de la lumière transmise, forment une arrangement de triangulation et l'unité d'évaluation est formée de détecter des objets de réflexion diffuse dans le second canal et au moyen d'un dispositif d'émission optique (32), la lumière transmise est focalisable sur une région de détection (34) et la lumière réflècter de manière diffuse sont couplée dans le deuxième canal de réception par un système optique de réception (46) et l'optique d'émission (132) et le système optique de réception (146) sont agencés dans une tête optique (160) qui est relié à un boîtier de capteur (150) par guides de lumière (162, 164).

2. Capteur selon la revendication 1, **caractérisé en ce que** l'optique d'émission (32) et le système optique de réception (46) sont alignés les uns avec les autres selon un angle (α) de telle manière, que la lumière réflècter de manière diffuse (47) peut être détectée avec le deuxième canal de réception et la lumière réfléctér alignée (38) avec le premier canal de réception.

3. Capteur selon l'une des revendications précédentes 1 ou 2, **caractérisé en ce que** le guide de lumière (164) du second canal de réception ayant un diamètre plus grand que celui du premier canal.

4. Capteur selon l'une des revendications précédentes, **caractérisé en ce que** trois émetteurs de lumière (12, 14, 16) avec des longueurs d'onde différentes sont prévus, dont la lumière est couplée dans le canal de transmission commun par des diviseurs de faisceau (28, 22).

5. Capteur selon l'une des revendications précédentes 1 à 3, **caractérisé en ce que** l'optique de réception (146) ayant une diaphragme (170) qui est conçu de géométrie de telle sorte que la portion de lumière transmise par la diaphragme (170) est sensiblement indépendante de la distance de l'objet à détecter (36) à partir du capteur (10) ou de la tête optique (160), respectivement.

6. Capteur selon l'une des revendications précédentes, **caractérisé en ce que** la lumière reçue est déviée par un élément optique (40, 48) de telle sorte qu'un ou plusieurs récepteurs de lumière (42, 44) ne se trouvent pas dans un plan défini par la lumière transmise.

7. Capteur selon l'une des revendications précédentes, **caractérisé en ce que** le premier et le second récepteur de lumière (42, 44) sont disposés sur une carte de circuit commune.
